# FASCICULE DE BREVET EUROPEEN

(11) **EP 4 370 260 B1**
(45) Date de publication et mention de la délivrance du brevet: **22.10.2025**
(21) Numéro de dépôt: 22751131.8
(22) Date de dépôt: 06.07.2022
(51) Int. Cl.: B22C 1/00, B22C 9/04, B22C 9/10, B22C 9/18, B22D 29/00, B29C 33/52, B29C 70/48, B29D 99/00, B29L 31/08

(54) **NOYAU DE MOULAGE AMELIORE POUR LA FABRICATION DE PIECE AERONAUTIQUE CREUSE EN CMO**
VERBESSERTER FORMKERN ZUR HERSTELLUNG EINES HOHLEN OMC-TEILS
IMPROVED MOLDING CORE FOR MANUFACTURING A HOLLOW OMC PART

(30) Priorité: 16.07.2021 FR 2107727
(43) Date de publication de la demande: 22.05.2024
(73) Titulaire: SAFRAN, 75015 Paris (FR)
(72) Inventeur: SALLOT, Pierre, Jean, 77550 Moissy-Cramayel (FR); BECHELANY, Mirna, 77550 Moissy-Cramayel (FR); TRAN, Nicolas, 77550 Moissy-Cramayel (FR)
(74) Mandataire: Cabinet Beau de Loménie
(86) Numéro de dépôt international: PCT/FR2022/051355
(87) Numéro de publication internationale: WO 2023/285750

(56) Documents cités:
- US-A- 4 187 266
- US-A1- 2007 056 709

## Description

### Domaine Technique

L'invention concerne la fabrication de pièces aéronautiques creuses en CMO, en particulier d'aube de turbomachine aéronautique, notamment par des méthodes d'injection de résine dans une préforme fibreuse, mais pas uniquement. Plus précisément, l'invention se rapporte au noyau de moulage utilisé dans la fabrication de pièces aéronautiques creuses, à un procédé de fabrication d'un tel noyau de moulage, et à un procédé de fabrication d'une telle pièce aéronautique.

### Technique antérieure

Les pièces en matériau composite à matrice organique (CMO) sont couramment utilisées dans les moteurs aéronautiques tels que des turbomachines d'avion afin de réduire leur masse, tout en garantissant les propriétés mécaniques désirées, en particulier, leurs raideurs. Ces composites sont notamment couramment utilisés dans la réalisation des pièces de modules de soufflante, par exemple des aubes de soufflante ou des aubes directrices de sortie (OGV). Ces composites peuvent être obtenus en utilisant un renfort fibreux réalisé à partir d'un tissage tridimensionnel dans lequel les fils s'entrelacent de manière tridimensionnelle (tissage dit « interlock 3D ») et qui est imprégné dans une matrice, cette dernière étant injectée par voie liquide par exemple selon le procédé VARTM (de l'anglais « Vacuum Resin Transfer Molding », désignant le moulage par transfert de résine sous vide). Des procédés tels que l'estampage ou la thermocompression peuvent également être utilisés.

Par ailleurs, la plupart des pièces de modules de soufflante présentent une structure interne creuse et comprennent des cavités, ou présentent des formes extérieures complexes. Ces structures creuses sont obtenues par l'utilisation, lors de la fabrication des pièces, d'un mandrin, ou insert, ou noyau de moulage, inséré dans la préforme fibreuse avant l'injection de la résine, ou la thermocompression, ou l'estampage. A titre d'exemple non limitatif, un procédé VARTM pour la fabrication d'une pièce creuse en CMO présente les étapes suivantes :
- fabrication de la préforme fibreuse (par exemple par superposition de plis, par tissage 3D, par tressage ou par enroulement),
- insertion d'un noyau de moulage formant la cavité ou la forme extérieure complexe,
- mise en place de la préforme dans un outillage d'injection,
- fermeture de l'outillage d'injection,
- injection de résine,
- consolidation de la résine,
- démoulage de la pièce,
- extraction du noyau de moulage formant la cavité.

En outre, pour accroitre davantage le gain de masse, les structures composites peuvent être encore optimisées, par exemple en complexifiant les géométries des cavités internes.

Pour ce faire des solutions permettant notamment de réaliser des cavités internes ou des géométries externes non démoulables existent. Parmi ces solutions, des noyaux de moulage sous forme de vessies, ou des mandrins expansibles (par exemple en silicone) peuvent être utilisés. Ces solutions nécessitent néanmoins d'utiliser des assemblages d'outillages rigides complexes et potentiellement coûteux.

Il existe également des noyaux solubles applicables à la fabrication de pièces en CMO. Néanmoins, ces solutions ne permettent pas le recyclage des noyaux dissous, et la matière issue de la dissolution à la fin du procédé ne peut être évacuée dans les eaux usées pour des raisons environnementales, notamment en présence de nitrate par exemple. En outre, les conditions (montées en températures, dissolvants) nécessaires pour dissoudre les noyaux sont susceptibles de dégrader les propriétés chimiques et mécaniques du matériau composite CMO.

De plus les matériaux composites CMO présentent une large gamme de coefficients de dilatation thermique que les solutions actuelles ne permettent pas systématiquement de prendre en compte lors des étapes de cuisson et de refroidissement, notamment pour faire en sorte que le noyau de moulage formant la cavité ou la géométrie extérieure de la pièce soit à la bonne géométrie et ne se dégrade pas par les contraintes induites lors des changements de température.

Enfin, les solutions actuelles, comme décrit dans les documents US 4 187 266 A and US 2007/056709 A1, ne sont pas forcément usinables du fait de leur fragilité intrinsèque, ce qui limite la réalisation de ces noyaux à des formes démoulables.

Il existe donc un besoin pour une solution permettant de pallier au moins en partie aux inconvénients précités.

### Exposé de l'invention

Le présent exposé concerne un noyau de moulage pour la fabrication de pièce aéronautique creuse en CMO, notamment de pièce de module de soufflante, comprenant un matériau composite comprenant d'une part une première phase de formule Mₙ₊₁AlCₙ, où n = 1 à 3, et M étant un métal de transition choisi dans le groupe constitué du titane, du niobium, du chrome ou du zirconium, le matériau composite comprenant d'autre part une deuxième phase de formule Al₄C₃.

On comprend que la première phase est de type « phase MAX », structure cristalline de formule générique Mₙ₊₁AXₙ, associant des caractéristiques à la fois de métaux et de céramiques, et présentant notamment une bonne conductivité thermique et électrique, une bonne usinabilité, ainsi qu'une tolérance à l'endommagement et une résistance à l'oxydation à haute température.

Dans le présent exposé, l'utilisation de l'aluminium sur le site A et du carbone sur le site X permet d'assurer une bonne compatibilité chimique avec la phase Al₄C₃.

Par ailleurs, le titane, le niobium, le chrome ou le zirconium, utilisés sur le site M, présentent une bonne résistance mécanique à température ambiante et jusqu'à 300°C, permettant au matériau composite comprenant ces éléments de conserver une rigidité suffisante lors de la fabrication de la pièce creuse en CMO.

En outre, l'association de cette première phase, avec une deuxième phase de formule Al₄C₃, est particulièrement avantageuse. En effet, le carbure d'aluminium (Al₄C₃) est un composé inorganique, dont la température de fusion est très élevée (2200°C), et qui peut aisément s'hydrolyser à température ambiante, en présence d'une atmosphère riche en eau. Ainsi, le matériau composite utilisé pour le noyau de moulage du présent exposé intègre cette deuxième phase de carbure d'aluminium aux joints de grains de la première phase. Cela permet de rendre le matériau composite particulièrement réactif aux atmosphères contenant de l'eau. La dégradation du carbure d'aluminium s'accompagne d'une variation de volume et d'un dégagement de gaz, à même de fragmenter le joint de grain et de propager des fissures dans la première phase initiale. Il est ainsi possible de propager le phénomène d'hydrolyse sur des distances relativement grandes, et ainsi de faciliter la fragmentation et le décochage du noyau. En d'autres termes, le matériau composite formant le noyau peut être dense et massif initialement, et être réduit en poudre par hydrolyse.

D'autre part, le gradient chimique entre le carbure d'aluminium et la première phase contenant de l'aluminium et du carbone est très limité, ce qui permet de limiter l'interdiffusion entre les différents éléments chimiques lors des étapes de mise en forme du noyau et de coulée. En outre, une fois le décochage du noyau réalisé, un matériau fragmenté, composé de grains de la première phase et d'aluminium hydraté peut être récupéré. Après séchage, cette matière peut être « rechargée » en Al₄C₃ et réutilisée afin de fabriquer de nouveaux noyaux de moulage.

Le matériau composite du noyau de moulage selon le présent exposé allie ainsi les avantages précités liés aux composés de la première phase, à l'utilisation d'une deuxième phase de formule Al₄C₃, permettant la réalisation de structures creuses de formes complexes, tout en autorisant un décochage aisé et rapide des noyaux, sans avoir recours à des solutions chimiques potentiellement néfastes pour la pièce fabriquée ultérieurement et pour l'environnement, et pouvant être recyclées.

Dans certains modes de réalisation, la première phase est de l'une des formules parmi Ti₃AlC₂, Ti₂AlC, Cr₂AlC, Zr₂AlC, Zr₃AlC₂, Nb₄AlC₃, ou Nb₂AlC.

Ces phases présentent une résistance mécanique accrue à température ambiante, proche des céramiques, mais avec une meilleure ductilité que ces dernières et une conductivité électrique importante permettant notamment un usinage en électroérosion, ce qui rend leur utilisation plus aisée.

Dans certains modes de réalisation, le matériau composite comprend entre 1 et 50% de deuxième phase en volume du matériau composite, de préférence entre 1 et 20%. Ces valeurs permettent d'assurer la fragmentation du matériau composite par hydrolyse, tout en laissant un volume suffisant de première phase dans le matériau composite, permettant de conserver les avantages techniques liés à cette première phase. En outre, cette fraction de phase Al₄C₃ permet d'assurer la stabilité chimique du matériau à haute température, tout en permettant d'induire un phénomène d'hydrolyse facilitant le décochage.

Le présent exposé concerne également un procédé de fabrication d'un noyau de moulage pour la fabrication de pièce aéronautique creuse CMO, notamment de pièce de module de soufflante, le noyau de moulage comprenant un matériau composite comprenant d'une part une première phase de formule Mₙ₊₁AlCₙ, où n = 1 à 3 et M étant un métal de transition choisi dans le groupe constitué du titane, du niobium, du chrome ou du zirconium, le matériau composite comprenant d'autre part une deuxième phase de formule Al₄C₃, le noyau de moulage étant obtenu par un procédé de métallurgie des poudres comprenant une étape de mélange dans laquelle des poudres permettant d'obtenir le matériau composite sont mélangées, et une étape de mise en forme.

Le mélange des poudres permettant d'obtenir le matériau composite peut comprendre le mélange de poudres pures de carbone, d'aluminium, de titane, et/ou de niobium, et/ou de chrome et/ou du zirconium et/ou de carbure de zirconium, et/ou de carbure de niobium, et/ou de carbure de chrome, et/ou de chromium carbide, et/ou de carbure d'aluminium, et/ou de carbure de titane. En d'autres termes, le matériau composite constitutif du noyau de moulage est obtenu en faisant réagir les différentes poudres des éléments constitutifs de ce matériau à haute température. Ce procédé présente l'avantage de faire intervenir, dans l'élaboration du matériau composite, la phase Al₄C₃, permettant d'apporter les éléments AI et C nécessaires, apportant ainsi les avantages précités.

Par ailleurs, l'étape de mise en forme peut comprendre l'injection d'un liant sur une poudre (nommée « binder jetting » en anglais), l'injection d'un mélange de poudre métallique et d'un polymère thermoplastique (ou procédé MIM pour « Metal Injection Molding » en anglais) ou tout autre procédé d'impression 3D connu adapté, de préférence suivi d'un frittage, ou d'un frittage sous charge dit « frittage flash » (ou frittage SPS pour « Spark Plasma Sintering » en anglais), par exemple.

Dans certains modes de réalisation, l'étape de mélange comprend le mélange de poudres pures constitutives de la première phase de manière à obtenir la première phase sous forme de poudre, puis le mélange de ladite première phase sous forme de poudre avec une poudre d'Al₄C₃ de manière à obtenir la deuxième phase.

En d'autres termes, les poudres pures de carbone, d'aluminium, de titane de niobium, de chrome ou du zirconium et/ou de carbure de zirconium, et/ou de carbure de niobium, et/ou de carbure de chrome, et/ou de chromium carbide, et/ou de carbure d'aluminium, et/ou de carbure de titane sont mélangées en premier lieu, de manière à obtenir la première phase dans un premier temps, puis la première phase obtenue est mélangée à une poudre de carbure d'aluminium dans un deuxième temps, de manière à obtenir la deuxième phase. Cela permet d'améliorer la maîtrise des proportions de chaque phase.

Dans certains modes de réalisation, l'étape de mélange comprend le mélange de poudres pures constitutives de la première phase avec une poudre d'Al₄C₃ en excès de manière à former le matériau composite en une opération.

En d'autres termes, selon cette configuration, le mélange des poudres n'est pas réalisé en deux temps (fabrication de la première phase dans un premier temps, puis mélange avec une poudre de carbure d'aluminium), mais les poudres pures précitées sont mélangées dans une même opération avec une poudre d'Al₄C₃ en excès, c'est-à-dire en sur-stœchiométrie, permettant ainsi la formation du matériau composite « in situ ». Le fait de faire réagir la poudre d'Al₄C₃ en sur-stœchiométrie par rapport à la première phase recherchée permet de maintenir une fraction volumique contrôlée de cette phase dans le matériau final.

Le présent exposé concerne également un procédé de fabrication d'une pièce aéronautique creuse en CMO utilisant un noyau de moulage obtenu par un procédé selon l'un quelconque des modes de réalisation précédents, le procédé comprenant, après des étapes d'insertion du noyau de moulage dans une préforme fibreuse, d'imprégnation d'une résine dans la préforme fibreuse et de solidification de la résine, une étape de décochage du noyau de moulage par étuvage.

En d'autres termes, après solidification, ou polymérisation de la résine dans la préforme fibreuse disposée autour du noyau de moulage, l'ensemble est disposé dans un dispositif, par exemple une étuve, de préférence à hygrométrie contrôlée. Comme évoqué précédemment, la présence de la phase Al₄C₃ entre les joints de grain permet, dans un air chargé en eau, la désagrégation du noyau de moulage. Cela permet ainsi de faciliter le décochage, et en particulier d'améliorer le décochage des canaux très fins, tout en s'affranchissant de l'utilisation de solutions chimiques, telles que des acides, potentiellement néfastes pour la pièce fabriquée.

Dans certains modes de réalisation, le procédé comprend, après l'étape de décochage, une étape de récupération, dans laquelle le matériau décoché par étuvage est récupéré de manière à être réutilisé pour la fabrication d'un autre noyau de moulage en repartant de l'étape de mélange.

En d'autres termes, une fois la dégradation du noyau réalisée, un matériau fragmenté composé de grains de la première phase et d'aluminium hydraté peut être récupéré. Après séchage, cette matière peut être « rechargée » en Al₄C₃ lors de l'étape de mélange et être ainsi réutilisée afin de fabriquer de nouveaux noyaux. Il est ainsi possible de recycler le noyau de moulage décoché, permettant ainsi de répondre au moins en partie aux problématiques environnementales précitées.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est une vue en perspective de deux aubes creuses de module de soufflante en CMO,
[Fig. 2] La figure 2 est une vue en coupe, selon le plan de coupe B-B, de l'aube creuse de la figure 1,
[Fig. 3] La figure 3 est une vue en perspective d'un noyau de moulage selon le présent exposé,
[Fig. 4] La figure 4 est une vue schématique en perspective montrant une préforme fibreuse avant insertion du noyau de moulage,
[Fig. 5] La figure 5 est une vue schématique en perspective représentant l'insertion du noyau de moulage de la figure 3 dans la préforme fibreuse de la figure 4,
[Fig. 6] La figure 6 représente schématiquement les étapes d'un procédé de fabrication d'une pièce creuse en CMO selon un premier mode de réalisation conforme à l'exposé,
[Fig. 7] La figure 7 représente schématiquement les étapes d'un procédé de fabrication d'une pièce creuse en CMO selon un deuxième mode de réalisation conforme à l'exposé.

### Description des modes de réalisation

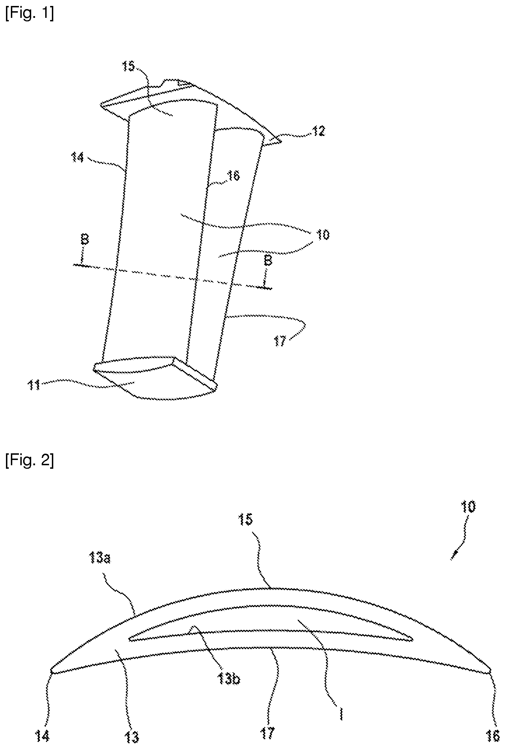

La figure 1 représente une vue en perspective d'un module de soufflante. Plus précisément, la figure 1 représente des aubes directrices de sortie (OGV) 10, destinées à être disposées en aval des aubes d'une soufflante pour redresser un flux d'air secondaire. Cet exemple n'est pas limitatif, l'invention s'appliquant également aux aubes de la soufflante par exemple, ou tout autre module de soufflante en CMO. Les aubes directrices de sortie 10 (ou les aubes de soufflante), sont réalisées dans un matériau composite organique (CMO) avec un renfort fibreux noyé dans une matrice. En outre, les aubes directrices de sortie 10 s'étendent radialement entre un carter 11 de la turbomachine et la nacelle 12. Elles comprennent chacune un bord d'attaque 14, un bord de fuite 16, un extrados 15 et un intrados 17.

La figure 2 représente la structure interne d'une aube directrice de sortie 10, dans un plan de coupe radial B-B de la figure 1. L'aube directrice de sortie 10 a une structure creuse. Elle comprend plus précisément une peau externe 13, dont la surface externe 13a définit le profil aérodynamique de l'aube, et dont la surface interne 13b définit une cavité interne I.

Une telle aube peut être obtenue par des procédés connus tels que l'injection de résine (dit RTM pour « Resin Transfer Molding » en anglais ») dans une préforme fibreuse, la thermocompression ou l'estampage. Quel que soit le procédé utilisé, la structure creuse des aubes est obtenues en insérant dans la préforme, au cours du procédé de fabrication, un noyau de moulage 30, fabriqué lors d'une étape préliminaire du procédé, et dont la forme correspond à la forme de la cavité interne I de l'aube destinée à être fabriquée.

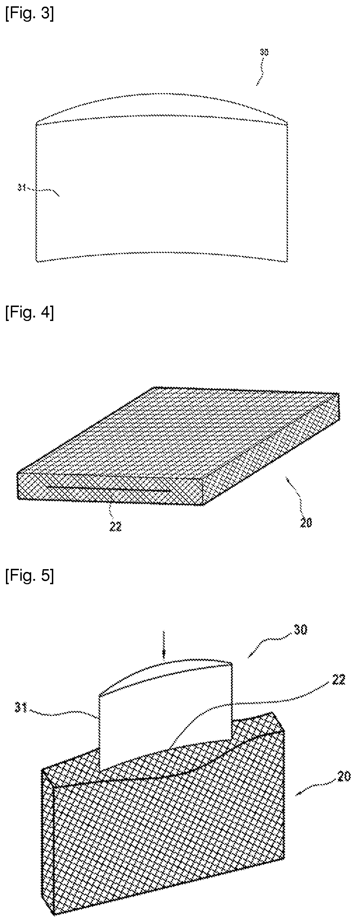

Un tel noyau de moulage 30, conforme au présent exposé, est représenté en perspective sur la figure 3. Le noyau de moulage 30 selon le présent exposé comprend une paroi latérale 31 destinée à former la surface interne 13b de la peau externe 13 de l'aube directrice de sortie 10, et ainsi la cavité interne de l'aube directrice de sortie 10. Il comprend en outre un matériau composite permettant de faciliter l'élimination de ce noyau 30, lors de l'étape de décochage décrite ultérieurement.

En effet, le matériau composite comprend deux phases : une première phase dite « phase MAX », et une deuxième phase de formule Al₄C₃, autrement dit du carbure d'aluminium.

Les phases MAX sont des matériaux dits stœchiométriques, connus en soi, de formule : Mₙ₊₁AXₙ, avec n=1 à 3, M étant un métal de transition, A un élément du groupe A et X du carbone et/ou de l'azote.

La première phase est déterminée de telle sorte à avoir une bonne compatibilité chimique avec l'Al₄C₃ à température élevée, afin d'éviter l'interaction de cette phase avec la phase MAX lors d'étapes de frittage par exemple. Ainsi, dans le présent exposé, l'élément utilisé dans le groupe A est de l'aluminium (AI), et l'élément utilisé sur le site X est du carbone (C). En effet, les phases contenant de l'azote (N) ne possède pas une compatibilité chimique suffisante avec la phase Al₄C₃. Enfin, l'élément utilisé sur le site M peut être du titane (Ti), de chrome (Cr), du niobium (Nb) ou du zirconium (Zr).

Ainsi, dans l'application du présent exposé, la première phase utilisée peut être de formule Ti₃AlC₂, Ti₂AlC, Cr₂AlC, Zr₂AlC, Zr₃AlC₂, Nb₄AlC₃, ou Nb₂AlC.

La deuxième phase de formule Al₄C₃ est un carbure connu dont la température de fusion est très élevée (2200°C). Elle est en oute aluminoformeuse à haute température. Néanmoins, la propriété particulièrement avantageuse dans le cadre de l'invention est la facilité que présente cette phase à s'hydrolyser à température ambiante en présence d'une atmosphère riche en eau. La décomposition de cette phase suit la réaction suivante :

Al₄C₃ + 12 H₂O → 4 Al(OH)₃ + 3 CH₄

Cette réaction peut être catalysée en optimisant le niveau d'hygrométrie mais également la température.

Ainsi, compte tenu de la présence de la deuxième phase de formule Al₄C₃, entre les joints de grain de la première phase, le noyau de moulage 30 comprenant ce matériau composite peut être aisément éliminé en étant dégradé par hydrolyse, à l'issue du procédé de fabrication de l'aube.

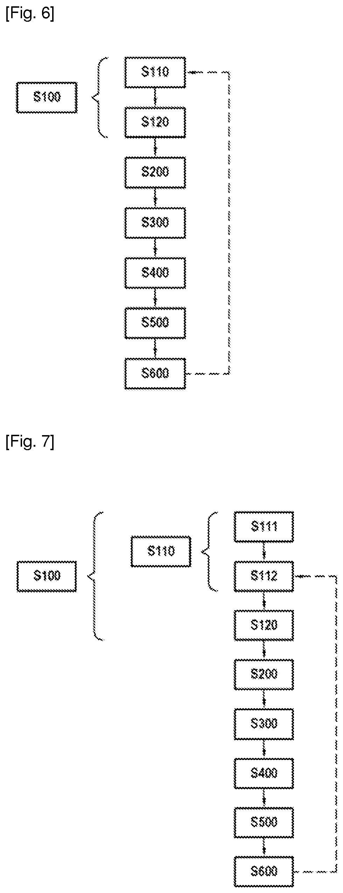

A cet égard, dans l'exemple décrit ci-dessous, le procédé de fabrication de pièce aéronautique creuse en CMO selon le présent exposé, notamment de module de soufflante, ici des aubes directrices de sortie 10, est un procédé par injection de résine dans une préforme fibreuse. Les différentes étapes de ce procédé, selon un premier mode de réalisation, sont présentées sur la figure 6.

La première étape S100 de ce procédé consiste à fabriquer le noyau de moulage 30 décrit ci-dessus, destiné à être utilisé ensuite dans la fabrication d'aubes directrices de sortie 10 creuses de turbomachine.

Le noyau de moulage 30 ainsi fabriqué à l'étape S100 est ensuite inséré dans une préforme fibreuse 20, ou renfort fibreux, représentée sur la figure 4 et destinée à former la peau externe 13 de l'aube 10 (étape S200). La préforme fibreuse 20 est par exemple formée à partir d'un tissage tridimensionnel dans lequel les fils s'entrelacent de manière tridimensionnelle (tissage dit « interlock 3D »). La fabrication d'une telle préforme fibreuse est connue de l'homme du métier et ne sera pas décrite en détails dans le présent exposé. On notera toutefois que la préforme fibreuse 20 comprend une zone de déliaison 22 s'étendant sur toute la longueur de la préforme, permettant de séparer localement, au niveau de la zone de déliaison 22, deux parties de la préforme fibreuse 20. L'ouverture créée par la séparation de ces deux parties permet l'insertion du noyau de moulage 30. L'étape S200 d'insertion du noyau de moulage 30 dans la préforme fibreuse 20 est en outre représentée sur la figure 5.

Ainsi, à l'issue de cette étape et compte tenu de la forme du noyau de moulage 30, la préforme fibreuse 20 prend elle-même la forme souhaitée de la pièce finale, moyennant les étapes de compression et de finitions éventuellement nécessaires à la fin du procédé. En particulier, dans le cas de l'aube directrice de sortie 10 selon le présent mode de réalisation, la préforme fibreuse 20 disposée autour du noyau de moulage 30 adopte la courbure et la cambrure de la pièce finale, représentée sur la figure 2.

L'injection d'une matrice, par exemple une résine thermodurcissable ou thermoplastique, dans la préforme fibreuse 20, permettant la densification et la consolidation de la pièce, est ensuite réalisée (étape S300). Pour ce faire, l'ensemble noyau de moulage 30/préforme fibreuse 20 est disposé est maintenu dans un outillage de conformation (non représenté) connu en soi, au moins jusqu'à rigidification (ou consolidation) de la préforme.

Un traitement thermique permettant la polymérisation ou le durcissement de la résine est ensuite effectué (étape S400). Au cours de cette étape, l'ensemble est chauffé afin de durcir la résine et d'obtenir la pièce finale rigide.

Enfin, le noyau de moulage 30 est éliminé par décochage, afin d'obtenir la pièce finale creuse représentée sur la figure 2 par exemple (étape S500).

Conformément au présent exposé, l'étape S100 de fabrication du noyau de moulage 1 se décline en plusieurs étapes. Dans un premier temps, des poudres métalliques sont mélangées entre elles, de manière à obtenir une poudre composite comprenant la première et la deuxième phase (étape S110). Selon le premier mode de réalisation, des poudres pures d'aluminium (AI), de carbone (C), de niobium (Nb), et/ou de chrome (Cr), et/ou de titane (Ti), et/ou de zirconium (Zr), et/ou de d'aluminium, de titane, et/ou de niobium, et/ou de chrome et/ou du zirconium et/ou de carbure (ZrC), et/ou de carbure de niobium (NbC), et/ou de carbure de chrome (CrC), et/ou de chromium carbide (Cr₇C₃), et/ou de carbure de titane (TiC), sont mélangées avec une poudre de carbure d'aluminium (Al₄C₃) en excès, de manière à former in situ un matériau composite comprenant la première phase et la deuxième phase, de telle sorte que la deuxième phase représente entre 1 et 50%, de préférence entre 1 et 20% du volume total du matériau composite.

Une fois l'étape de mélange effectuée, le noyau de moulage 30 est mis en forme (étape S120), de manière à ce que ce dernier prenne la forme souhaitée. Cette étape peut être réalisée par divers procédés connus tels que l'injection d'un liant sur une poudre (nommée « binder jetting » en anglais), l'injection d'un mélange de poudre métallique et d'un polymère thermoplastique (ou procédé MIM pour « Metal Injection Molding » en anglais) ou tout autre procédé d'impression 3D connu adapté, de préférence suivi d'un déliantage et/ou frittage conventionnel, ou d'un déliantage et/ou frittage non conventionnel comme par exemple le « frittage flash » (ou frittage SPS pour « Spark Plasma Sintering » en anglais), ou tout autre procédé connu adapté, ou une combinaison de ces différents procédés.

Le noyau de moulage 30 ainsi obtenu peut être ensuite utilisé dans le procédé standard de fabrication de pièces CMO creuse décrit ci-dessus, notamment à l'étape S200 d'insertion du noyau 30 dans la préforme fibreuse 20.

Par ailleurs, l'étape S500 mentionnée ci-dessus, comprenant le décochage du noyau de moulage 30, peut être réalisée en disposant l'ensemble dans une étuve à hygrométrie contrôlée (humidité relative HR >50%) ou de préférence dans un autoclave à vapeur d'eau, à des températures comprises entre 100 et 180°C, et des pressions comprises entre 6 et 12 bars. L'application d'une pression permet d'accélérer la cinétique de décochage tout en facilitant l'accès des vapeurs aux sections fines.

Enfin, l'étape S500 de décochage peut être suivie par une étape de récupération (étape S600), ou recyclage, dans laquelle le matériau composite décoché par étuvage, alors sous forme de poudre, est récupéré de manière à être réutilisé pour la fabrication d'un autre noyau de moulage 30, en repartant de l'étape de mélange S110. Plus précisément, une fois la dégradation du noyau réalisée, un matériau fragmenté composé de grains de la première phase et d'aluminium hydraté est récupéré. Après séchage, cette matière peut être « rechargée » en Al₄C₃ et réutilisée afin de fabriquer de nouveaux noyaux de moulage 30.

Les différentes étapes d'un procédé de fabrication d'aubes par injection de résine dans une préforme fibreuse selon un deuxième mode de réalisation du présent exposé, sont présentées sur la figure 7.

Le procédé selon le deuxième mode réalisation diffère du procédé selon le premier mode de réalisation en ce que l'étape S110 de mélange des poudres est décomposée en deux sous-étapes. En effet, alors que dans le cadre du premier mode de réalisation, l'étape de mélange est réalisée en une seule opération, dans laquelle le matériau composite est formé in situ de par la présence en excès de la phase Al₄C₃, l'étape S110 de mélange des poudres dans le cadre du deuxième mode de réalisation comprend dans un premier temps le mélange de poudres pures constitutives de la première phase permettant d'obtenir la première phase (étape S111), puis le mélange de la première phase ainsi obtenue avec une poudre d'Al₄C₃ permettant d'obtenir ex situ le matériau composite (étape S112).

A titre d'exemple, lors de l'étape S111, une première phase de formule Nb₄AlC₃ peut être obtenue en mélangeant des poudres pures de niobium, d'aluminium et de carbure de niobium (Nb : Al : NbC) suivant les proportions molaires 1,2 : 1,1: 2,8 respectivement. Dans ce cas, les grains de niobium présentent un diamètre inférieur à 44 µm, une pureté de 99,8%, et une masse volumique de 8,57 g/cm³. Les grains d'aluminium présentent un diamètre inférieur à 44 µm, une pureté de 99,5%, et une masse volumique de 2,70 g/cm³, et les grains de carbure de niobium présentent un diamètre inférieur à 10 µm, une pureté de 99%, et une masse volumique de 7,82 g/cm³. Ces différentes poudres peuvent être mélangées en attriteur et dans un solvant (par exemple de l'éthanol), puis soumises à un séchage et à un frittage réactif jusqu'à 1700°C. Le massif poreux ainsi obtenu est broyé pour être réduit en poudre.

A titre d'exemple également, lors de l'étape S111, une première phase de formule Ti₃AlC₂ peut être obtenue en mélangeant des poudres pures de titane, d'aluminium et de carbure de titane (Ti : Al : TiC) suivant les proportions molaires 1 : 1.05 : 1.9 respectivement. Dans ce cas, les grains de titane présentent un diamètre inférieur à 45 µm, une pureté de 99,5%. Les grains d'aluminium présentent un diamètre compris entre 45 et 150 µm, une pureté de 99,5% et les grains de carbure de titane présentent un diamètre de 2 µm, une pureté de 99,5%, et une masse volumique de 7,82 g/cm3. Ces différentes poudres peuvent être mélangées dans un mélangeur à boulet, puis soumises à un frittage réactif jusqu'à 1450°C. Le massif poreux ainsi obtenu est broyé pour être réduit en poudre.

On notera en outre que, lors de l'étape S111, les poudres pures peuvent également être mélangées avec une poudre Al₄C₃. Dans ce cas, la poudre d'Al₄C₃ contribue à la formation de la première phase, mais n'est pas en quantité suffisante pour former in situ le matériau composite, de telle sorte que la deuxième étape S112 est nécessaire, et permet d'ajouter une quantité nécessaire de poudre d'Al₄C₃, permettant d'obtenir les proportions d'Al₄C₃ mentionnées précédemment dans le matériau composite.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Noyau de moulage (30) pour la fabrication de pièce aéronautique creuse en composite à matrice organique, notamment de pièce de module de soufflante, comprenant un matériau composite comprenant d'une part une première phase de formule Mₙ₊₁AlCₙ, où n = 1 à 3, et M étant un métal de transition choisi dans le groupe constitué du titane, du niobium, du chrome ou du zirconium, le matériau composite comprenant d'autre part une deuxième phase de formule Al₄C₃.

2. Noyau de moulage (30) selon la revendication 1, dans lequel la première phase est de l'une des formules parmi Ti₃AlC₂, Ti₂AlC, Cr₂AlC, Zr₂AlC, Zr₃AlC₂, Nb₄AlC₃, ou Nb₂AlC.

3. Noyau de moulage (30) selon la revendication 1 ou 2, dans lequel le matériau composite comprend entre 1 et 50% de deuxième phase en volume du matériau composite, de préférence entre 1 et 20%.

4. Procédé de fabrication d'un noyau de moulage (30) pour la fabrication de pièce aéronautique creuse en composite à matrice organique, notamment de pièce de module de soufflante, le noyau de moulage (30) comprenant un matériau composite comprenant d'une part une première phase de formule Mₙ₊₁AlCₙ, où n = 1 à 3 et M étant un métal de transition choisi dans le groupe constitué du titane, du niobium, du chrome ou du zirconium, le matériau composite comprenant d'autre part une deuxième phase de formule Al₄C₃, le noyau de moulage (30) étant obtenu par un procédé de métallurgie des poudres comprenant une étape de mélange dans laquelle des poudres permettant d'obtenir le matériau composite sont mélangées, et une étape de mise en forme.

5. Procédé selon la revendication 4, dans lequel l'étape de mélange comprend le mélange de poudres pures constitutives de la première phase de manière à obtenir la première phase sous forme de poudre, puis le mélange de ladite première phase sous forme de poudre avec une poudre d'Al₄C₃ de manière à obtenir la deuxième phase.

6. Procédé selon la revendication 4, dans lequel l'étape de mélange comprend le mélange de poudres pures constitutives de la première phase avec une poudre d'Al₄C₃ en excès de manière à former le matériau composite en une opération.

7. Procédé de fabrication d'une pièce aéronautique creuse en composite à matrice organique utilisant un noyau de moulage (30) obtenu par un procédé selon l'une quelconque des revendications 4 à 6, le procédé comprenant, après des étapes d'insertion du noyau de moulage (30) dans une préforme fibreuse (20), d'imprégnation d'une résine dans la préforme fibreuse (20) et de solidification de la résine, une étape de décochage du noyau de moulage (30) par étuvage.

8. Procédé selon la revendication 7, comprenant, après l'étape de décochage, une étape de récupération, dans laquelle le matériau décoché par étuvage est récupéré de manière à être réutilisé pour la fabrication d'un autre noyau de moulage (30) en repartant de l'étape de mélange.

## Patentansprüche

1. Formkern (30) für die Herstellung eines hohlen Luftfahrtteils aus einem Verbundwerkstoff mit organischer Matrix, insbesondere eines Teils eines Gebläsemoduls, umfassend ein Verbundmaterial, umfassend einerseits eine erste Phase von Formel Mₙ₊₁AlCₙ, wobei n = 1 bis 3 und M ein Übergangsmetall ist, das ausgewählt ist aus der Gruppe, bestehend aus Titan, Niob, Chrom oder Zirkonium, das Verbundmaterial andererseits umfassend eine zweite Phase von Formel Al₄C₃.

2. Formkern (30) nach Anspruch 1, wobei die erste Phase eine der Formeln Ti₃AlC₂, Ti₂AlC, Cr₂AlC, Zr₂AlC, Zr₃AlC₂, Nb₄AlC₃ oder Nb₂AlC ist.

3. Formkern (30) nach Anspruch 1 oder 2, wobei das Verbundmaterial zwischen 1 und 50 % zweite Phase, bezogen auf das Volumen des Verbundmaterials, vorzugsweise zwischen 1 und 20 %, umfasst.

4. Verfahren zur Herstellung eines Formkerns (30) für die Herstellung eines hohlen Luftfahrtteils aus Verbundwerkstoff mit organischer Matrix, insbesondere eines Teils eines Gebläsemoduls, der Formkern (30) umfassend ein Verbundmaterial, umfassend einerseits eine erste Phase von Formel Mₙ₊₁AlCₙ, wobei n = 1 bis 3 und M ein Übergangsmetall ist, das ausgewählt ist aus der Gruppe, bestehend aus Titan, Niob, Chrom oder Zirkonium, das Verbundmaterial andererseits umfassend eine zweite Phase von Formel Al₄C₃, wobei der Formkern (30) durch ein pulvermetallurgisches Verfahren erlangt wird, umfassend einen Mischschritt, bei dem Pulver gemischt werden, die es ermöglichen, das Verbundmaterial zu erlangen, und einen Formgebungsschritt.

5. Verfahren nach Anspruch 4, wobei der Mischschritt das Mischen von reinen Pulvern, die die erste Phase bilden, um die erste Phase in Pulverform zu erlangen, und dann das Mischen der ersten Phase in Pulverform mit einem Al₄C₃-Pulver, um die zweite Phase zu erlangen, umfasst.

6. Verfahren nach Anspruch 4, wobei der Mischschritt das Mischen von reinen Pulvern, die die erste Phase bilden, mit einem überschüssigen Al₄C₃-Pulver umfasst, um das Verbundmaterial in einem Vorgang zu bilden.

7. Verfahren zur Herstellung eines hohlen Luftfahrtteils aus einem Verbundwerkstoff mit organischer Matrix unter Verwendung eines Formkerns (30), der durch ein Verfahren nach einem der Ansprüche 4 bis 6 erlangt wird, das Verfahren umfassend nach den Schritten eines Einsetzens des Formkerns (30) in eine Faservorform (20), eines Imprägnierens eines Harzes in der Faservorform (20) und eines Verfestigens des Harzes, einen Schritt eines Entformens des Formkerns (30) durch Wärmebehandlung umfasst.

8. Verfahren nach Anspruch 7, umfassend, nach dem Wärmebehandlungsschritt einen Rückgewinnungsschritt, in dem das durch Wärmebehandlung entformte Material zurückgewonnen wird, sodass es für die Herstellung eines weiteren Formkerns (30), beginnend mit dem Mischschritt, wiederverwendet werden kann.

## Claims

1. A molding core (30) for manufacturing an organic matrix composite hollow aeronautical part, in particular a fan module part, comprising a composite material comprising on the one hand a first phase of formula Mₙ₊₁AlCₙ, where n = 1 to 3, and M being a transition metal selected from the group consisting of titanium, niobium, chromium or zirconium, the composite material comprising on the other hand a second phase of formula Al₄C₃.

2. The molding core (30) according to claim 1, wherein the first phase is of one of the formulae among Ti₃AlC₂, Ti₂AlC, Cr₂AlC, Zr₂AlC, Zr₃AlC₂, Nb₄AlC₃, or Nb₂AlC.

3. The molding core (30) according to claim 1 or 2, wherein the composite material comprises between 1 and 50% second phase by volume of the composite material, preferably between 1 and 20%.

4. A method of manufacturing a molding core (30) for the production of an organic matrix composite hollow aeronautical part, in particular a fan module part, the molding core (30) comprising a composite material comprising, on the one hand, a first phase of formula Mₙ₊₁AlCₙ, where n = 1 to 3 and M being a transition metal selected from the group consisting of titanium, niobium, chromium or zirconium, the composite material comprising, on the other hand, a second phase of formula Al₄C₃, the molding core (30) being obtained by a powder metallurgy process comprising a mixing step in which powders for obtaining the composite material are mixed, and a shaping step.

5. The method according to claim 4, wherein the mixing step comprises mixing pure powders constituting the first phase so as to obtain the first phase in powder form, then mixing said first phase in powder form with an Al₄C₃ powder so as to obtain the second phase.

6. The method according to claim 4, wherein the mixing step comprises mixing pure powders constituting the first phase with excess Al₄C₃ powder so as to form the composite material in a single operation.

7. A method of manufacturing an organic matrix composite hollow aeronautical part using a molding core (30) obtained by a method according to any one of claims 4 to 6, the method comprising, after steps of inserting the molding core (30) into a fibrous preform (20), impregnating a resin into the fibrous preform (20) and solidifying the resin, a step of knockout the molding core (30) by steaming.

8. The method according to claim 7, comprising, after the knockout step, a recovery step, in which the material knocked out by steaming is recovered so as to be reused in the manufacture of another molding core (30) starting again from the mixing step.
